# EUROPEAN PATENT SPECIFICATION

(11) **EP 1 765 954 B1**
(45) Date of publication and mention of the grant of the patent: **04.10.2017**
(21) Application number: 05748444.6
(22) Date of filing: 19.05.2005
(51) Int. Cl.: C10G 9/14, C10G 9/16, C10G 9/20

(54) **PROCESS FOR CRACKING A HEAVY HYDROCARBON FEEDSTOCK IN A PYROLYSIS FURNACE**
VERFAHREN FÜR CRACKEN EINES SCHWEREN KOHLENWASSERSTOFFEINSATZSTOFFS IN EINEM PYROLYSEOFEN
PROCEDE DE CRAQUAGE D'HYDROCARBURES LOURDS DANS UN FOURNEAU A PYROLYSE

(30) Priority: 21.05.2004 US 851495; 21.05.2004 US 851486; 21.05.2004 US 851546; 21.05.2004 US 851878; 21.05.2004 US 851494; 21.05.2004 US 851487; 21.05.2004 US 851434; 21.05.2004 US 851730; 21.05.2004 US 851500; 21.05.2004 US 573474 P; 14.07.2004 US 891981; 14.07.2004 US 891795; 16.07.2004 US 893716; 28.10.2004 US 975703; 10.12.2004 US 9661
(43) Date of publication of application: 28.03.2007
(73) Proprietor: ExxonMobil Chemical Patents Inc., Baytown, TX 77520 (US)
(72) Inventor: STELL, Richard, C., Houston, TX 77062 (US); ANNAMALAI, Subramanian, Houston, TX 77058 (US); FRYE, James, M., Houston, TX 77044 (US)
(74) Representative: ExxonMobil Chemical Europe Inc.
(86) International application number: PCT/US2005/017545
(87) International publication number: WO 2005/113716

(56) References cited:
- US-A- 1 936 699
- US-A- 3 291 573
- US-A- 3 677 234
- US-A1- 2004 004 022
- US-B1- 6 632 351

## Description

### FIELD OF THE INVENTION

The present invention relates to a process for controlling the draft in a pyrolysis furnace which is cracking a hydrocarbon feedstock, and in particular a heavy hydrocarbon feedstock.

### BACKGROUND OF THE INVENTION

Steam cracking, also referred to as pyrolysis, has long been used to crack various hydrocarbon feedstocks into olefins, preferably light olefins such as ethylene, propylene, and butenes. Conventional steam cracking utilizes a pyrolysis furnace which has two main sections: a convection section and a radiant section. The hydrocarbon feedstock typically enters the convection section of the furnace as a liquid (except for light or low molecular weight feedstocks which enter as a vapor) wherein it is typically heated and vaporized by indirect contact with hot flue gas from the radiant section and by direct contact with steam. The vaporized feedstock and steam mixture is then introduced into the radiant section where the cracking takes place. The resulting products, including olefins, leave the pyrolysis furnace for further downstream processing, including quenching.

Conventional steam cracking systems have been effective for cracking high-quality feedstocks such as gas oil and naphtha. However, steam cracking economics sometimes favor cracking low cost heavy feedstock such as, by way of non-limiting examples, crude oil and atmospheric resid, also known as atmospheric pipestill bottoms. Crude oil and atmospheric resid contain high molecular weight, non-volatile components with boiling points in excess of 590°C (1100°F). The non-volatile, heavy ends of these feedstocks lay down as coke in the convection section of conventional pyrolysis furnaces. Only very low levels of non-volatiles can be tolerated in the convection section downstream of the point where the lighter components have fully vaporized. Additionally, some naphthas are contaminated with crude oil or resid during transport. Conventional pyrolysis furnaces do not have the flexibility to process resids, crudes, or many residue- or crude-contaminated gas oils or naphthas, which contain a large fraction of heavy non-volatile hydrocarbons.

The present inventors have recognized that in using a flash to separate heavy non-volatile hydrocarbons from the lighter volatile hydrocarbons which can be cracked in the pyrolysis furnace, it is important to maximize the non-volatile hydrocarbon removal efficiency. Otherwise, heavy, coke-forming non-volatile hydrocarbons could be entrained in the vapor phase and carried overhead into the furnace creating coking problems.

Additionally, during transport some naphthas are contaminated with heavy crude oil containing non-volatile components. Conventional pyrolysis furnaces do not have the flexibility to process residues, crudes, or many residue- or crude-contaminated gas oils or naphthas which are contaminated with non-volatile components.

To address coking problems, U.S. Patent 3,617,493 discloses the use of an external vaporization drum for the crude oil feed and discloses the use of a first flash to remove naphtha as vapor and a second flash to remove vapors with a boiling point between 230 and 590°C (450 and 1100°F). The vapors are cracked in the pyrolysis furnace into olefins and the separated liquids from the two flash tanks are removed, stripped with steam, and used as fuel.

U.S. Patent 3,718,709 discloses a process to minimize coke deposition. It describes preheating of heavy feedstock inside or outside a pyrolysis furnace to vaporize about 50% of the heavy feedstock with superheated steam and the removal of the residual, separated liquid. The vaporized hydrocarbons, which contain mostly light volatile hydrocarbons, are subjected to cracking.

U.S. Patent 5,190,634 discloses a process for inhibiting coke formation in a furnace by preheating the feedstock in the presence of a small, critical amount of hydrogen in the convection section. The presence of hydrogen in the convection section inhibits the polymerization reaction of the hydrocarbons thereby inhibiting coke formation.

U.S. Patent 5,580,443 discloses a process wherein the feedstock is first preheated and then withdrawn from a preheater in the convection section of the pyrolysis furnace. This preheated feedstock is then mixed with a predetermined amount of steam (the dilution steam) and is then introduced into a gas-liquid separator to separate and remove a required proportion of the non-volatiles as liquid from the separator. The separated vapor from the gas-liquid separator is returned to the pyrolysis furnace for heating and cracking.

US 2004/0004022 A1 describes an advantageously controlled process to optimize the cracking of volatile hydrocarbons contained in the heavy hydrocarbon feedstocks and to reduce and avoid coking problems. It provides a method to maintain a relatively constant ratio of vapor to liquid leaving the flash by maintaining a relatively constant temperature of the stream entering the flash. More specifically, the constant temperature of the flash stream is maintained by automatically adjusting the amount of a fluid stream mixed with the heavy hydrocarbon feedstock prior to the flash. The fluid can be water.

US2005095548 describes a process for cracking heavy hydrocarbon feedstock which mixes heavy hydrocarbon feedstock with a fluid, e.g., hydrocarbon or water, to form a mixture stream which is flashed to form a vapor phase and a liquid phase, the vapor phase being subsequently cracked to provide olefins, and the product effluent cooled in a transfer line exchanger, wherein the amount of fluid mixed with the feedstock is varied in accordance with a selected operating parameter of the process, e.g., temperature of the mixture stream before the mixture stream is flashed.

US 2004/0004028 A1 describes an advantageously controlled process to increase the non-volatile removal efficiency in a flash drum in the steam cracking system wherein gas flow from the convection section is converted from mist flow to annular flows before entering the flash drum to increase the removal efficiency by subjecting the gas flow first to an expender and then to bends, forcing the flow to change direction. This coalesces fine liquid droplets from the mist. US 6632351 discloses a process for the pyrolysis of crude oil feedstock or crude oil fraction containing pitch in which the degree of vaporization can be controlled by adjusting a definition/feedstock ratio and a flash temperature of the gas liquid mixture.

When using a vapor/liquid separation apparatus such as a flash drum to separate the lighter volatile hydrocarbons as vapor phase from the heavy non-volatile hydrocarbon as liquid phase, it is important to carefully control the ratio of vapor to liquid leaving the flash drum. Otherwise valuable lighter fractions of the hydrocarbon feedstock could be lost in the liquid hydrocarbon bottoms or heavy, coke-forming components could be vaporized and carried as overhead into the furnace causing coke problems.

The control of the ratio of vapor to liquid leaving the flash drum has been found to be difficult because many variables are involved. The ratio of vapor to liquid is a function of the hydrocarbon partial pressure in the flash drum and also a function of the temperature of the stream entering the flash drum. The temperature of the stream entering the flash drum varies as the furnace load changes. The temperature is higher when the furnace is at full load and is lower when the furnace is at partial load. The temperature of the stream entering the flash drum also varies according to the flue gas temperature in the furnace that heats the feedstock. The flue-gas temperature in turn varies according to the extent of coking that has occurred in the furnace. When the furnace is clean or very lightly coked, the flue-gas temperature is lower than when the furnace is heavily coked. The flue-gas temperature is also a function of the combustion control exercised on the burners of the furnace. When the furnace is operated with low levels of excess oxygen in the flue gas, the flue gas temperature in the mid to upper zones of the convection section will be lower than that when the furnace is operated with higher levels of excess oxygen in the flue-gas. With all these variables, it is difficult to control a constant ratio of vapor to liquid leaving the flash drum.

The present invention offers an advantageously controlled, process to optimize the cracking of volatile hydrocarbons contained in the heavy hydrocarbon feedstocks and to reduce and avoid the coking problems. The present invention provides a method to maintain a relatively constant ratio of vapor to liquid leaving the flash by maintaining a relatively constant temperature of the stream entering the flash. More specifically, the constant temperature of the flash stream is controlled by periodically adjusting the draft in the pyrolysis furnace, where the draft to control flue gas oxygen is the measure of the difference in the pressure of the flue gas in the furnace and the pressure outside of the furnace.

### SUMMARY OF THE INVENTION

The present invention provides a process for cracking a heavy hydrocarbon feedstock in a furnace having a convection section and a radiant section with radiant section burners which provide hot flue gas in said furnace which process comprises heating a heavy hydrocarbon feedstock in the convection section, mixing the heated heavy hydrocarbon feedstock with a primary dilution steam stream, heating the mixed feedstock and primary dilution stream in the convention section to form a hot mixture stream having vapor phase and a liquid phase; separating said vapor phase and said liquid phase in a separation vessel; and cracking said vapor phase in the radiant section to produce an effluent containing olefins, characterized in that said furnace has a draft and a means for adjusting said draft and that the draft in said furnace is continuously measured and periodically adjusted to control the temperature of the hot mixture stream and/or the vapor phase to main the ratio of said vapor phase and said liquid phase in the vessel substantially constant.

The furnace has draft which is continuously measured and periodically adjusted to control the temperature of the stream entering the separation vessel and thus control the ratio of vapor to liquid separated in the separation vessel. In a preferred embodiment, the means for adjusting the draft comprises varying the speed of at least one furnace fan, possibly in combination with adjusting the position of the furnace fan damper(s) or the furnace burner damper(s).

The process further comprises measuring the temperature of the vapor phase after the vapor phase is separated from the liquid phase; comparing the vapor phase temperature measurement with a pre-determined vapor phase temperature; and adjusting the draft in said furnace in response to said comparison.

In one embodiment, the temperature of the hot mixture stream can be further controlled by varying at least one of the flow rate or the temperature of the primary dilution steam stream. In another embodiment, the heated heavy hydrocarbon feedstock can also be mixed with a fluid prior to separating the vapor phase from the liquid phase, and the fluid can be at least one of liquid hydrocarbon and water. The temperature of the hot mixture stream can be further controlled by varying the flow rate of the fluid mixed with the heated hydrocarbon feedstock. The temperature of said hot mixture stream can also be further controlled by varying the flow rate of both the primary dilution steam stream and the flow rat of the fluid mixed with said heated heavy hydrocarbon feedstock.

In another embodiment, a secondary dilution steam stream is superheated in the furnace and at least a portion of the secondary dilution steam stream is then mixed with said hot mixture stream before separating the vapor phase from the liquid phase. With this embodiment, the temperature of the hot mixture stream can be further controlled by varying the flow rate and temperature of the secondary dilution steam stream. A portion of the superheated secondary dilution steam stream can be mixed with said vapor phase after separating said vapor phase from said liquid phase.

The use of primary dilution steam stream is optional for very high volatility feedstocks (e.g., ultra light crudes and contaminated condensates). It is possible that such feedstocks can be heated in the convection section, forming a vapor and a liquid phase and which is conveyed as heated hydrocarbon stream directly to the separation vessel without mixing with dilution steam. In that embodiment, the vapor phase and the liquid phase of the heated hydrocarbon feedstock will be separated in a separation vessel and the vapor phase would be cracked in the radiant section of the furnace. The furnace draft would be mixed with dilution steam and continuously measured and periodically adjusted to control the temperature of at least one of the heated hydrocarbon stream and the vapor phase separated from the liquid phase.

### BRIEF DESCRIPTION OF THE DRAWINGS

Figure 1 illustrates a schematic flow diagram of a process of one embodiment of the present invention employing at least one furnace fan.
Figure 2 illustrates a schematic flow diagram of a process of one embodiment of the present invention employing at least one furnace fan, at least one furnace damper and a primary dilution steam stream and a fluid mixed with the heated hydrocarbon feedstock.

### DETAILED DESCRIPTION OF THE INVENTION

The present invention relates to a process and "draft" control system for use in a pyrolysis furnace while cracking a hydrocarbon feedstock, and in particular a heavy hydrocarbon feedstock. The present invention provides a method to maintain a relatively constant ratio of vapor to liquid leaving the flash or vapor/liquid separation vessel by maintaining a relatively constant temperature of the stream entering the vapor/liquid separation vessel. More specifically, the temperature of the hot mixture stream, vapor stream or flash stream can be adjusted and maintained by periodically adjusting the draft in the pyrolysis furnace, where the draft is the measure of the difference in pressure of the flue gas in the furnace and the pressure outside the furnace. The draft is used to control the flue gas oxygen in the furnace and thus the temperature of the stream entering the vapor/liquid separation vessel.

The heavy hydrocarbon feedstock to the furnace can comprise a large portion, such as 2 to 50%, of non-volatile components. Such feedstock could comprise, by way of non-limiting examples, one or more of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, C₄'s/residue admixtures, naphtha/residue admixtures, hydrocarbon gases/residue admixtures, hydrogen/residue admixtures, gas oil/residue admixtures, and crude oil.

As used herein, non-volatile components, or resids, are the fraction of the hydrocarbon feed with a nominal boiling point above 590°C (1100°F) as measured by ASTM D-6352-98 or D-2887. This invention works very well with non-volatiles having a nominal boiling point above 760°C (1400°F). The boiling point distribution of the hydrocarbon feed is measured by Gas Chromatograph Distillation (GCD) by ASTM D-6352-98 or D-2887 extended by extrapolation for materials boiling above 700°C (1292°F). Non-volatiles include coke precursors, which are large molecules that condense in the vapor, and then form coke under the operating conditions encountered in the present process of the invention.

The hydrocarbon feedstock can have a nominal end boiling point of at least 315°C (600°F), generally greater than 510°C (950°F), typically greater than 590°C (1100°F), for example greater than 760°C (1400°F). The economically preferred feedstocks are generally low sulfur waxy residues, atmospheric residues, naphthas contaminated with crude, various residue admixtures, and crude oils.

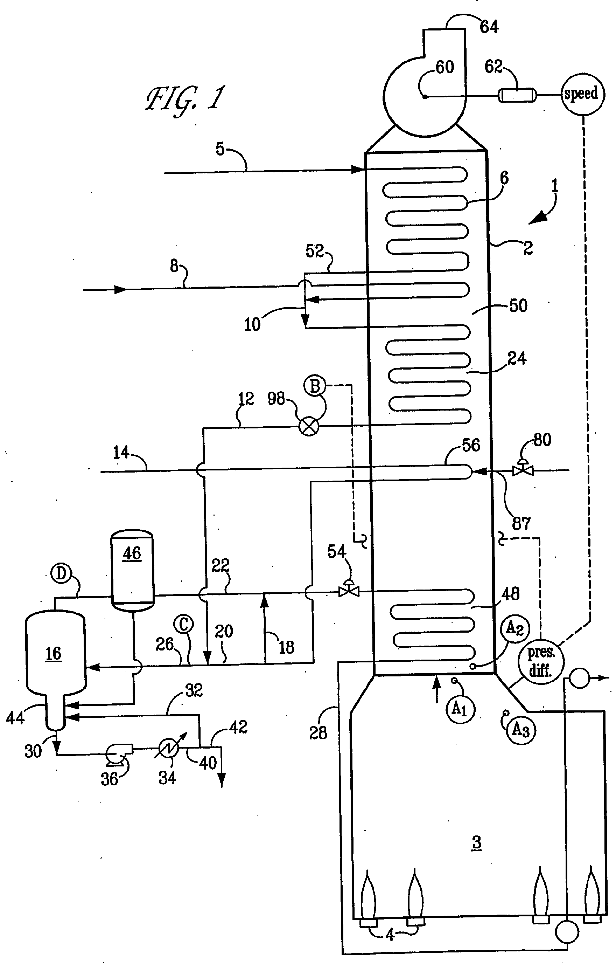

One embodiment of the process and draft control system can be described by reference to FIG. 1 which illustrates a furnace **1** having a convection section **2** and a radiant section **3**. The radiant section **3** has radiant section burners **4** which provide hot flue gas in the furnace **1**. The process comprises first heating a heavy hydrocarbon feedstock stream **5** in the convection section **2** of the furnace **1**. The heavy hydrocarbon feedstock is heated in the upper convection section **50** of the furnace **1**. The heating of the heavy hydrocarbon feedstock can take any form known by those of ordinary skill in the art. It is preferred that the heating comprises indirect contact of the feedstock in the convection section **2** of the furnace **1** with hot flue gases from the radiant section **3** of the furnace **1**. This can be accomplished, by way of non-limiting example, by passing the heavy hydrocarbon feedstock through a bank of heat exchange tubes **6** located within the upper convection section **50** of the pyrolysis furnace **1**. The heated heavy hydrocarbon feedstock **52** has a temperature between 300°F to 650°F (150°C to 345°C).

The heated heavy hydrocarbon feedstock is then mixed with a primary dilution steam stream **8** to form a mixture stream **10.** The primary dilution steam stream **8** is preferably superheated in the convection section **2** of the furnace **1**, and is preferably at a temperature such that it serves to partially vaporize the heated heavy hydrocarbon feedstock. The use of primary dilution steam stream **8** is optional for very high volatility feedstocks **5** (e.g., ultra light crudes and contaminated condensates). It is possible that such feedstocks can be heated in tube bank **6** forming a vapor and a liquid phase which is conveyed as heated hydrocarbon stream **12** directly to the separation vessel **16** without mixing with dilution steam stream **8**.

The mixture stream **10** is heated again in the furnace **1**. This heating can be accomplished, by way of non-limiting example, by passing the mixture stream **10** through a bank of heat exchange tubes **24** located within the convection section **2** of the furnace **1** and thus heated by the hot flue gas from the radiant section **3** of the furnace **1**. The thus-heated mixture leaves the convection section **2** as a hot mixture stream **12** having a vapor phase and a liquid phase which are ultimately separated in separation vessel **16**, which in FIG. 1 is illustrated as a knock-out or flash drum.

Optionally, a secondary dilution steam stream **14** is heated in the convection section **2** of the furnace **1** and is then mixed with the hot mixture stream **12**. The secondary dilution steam stream **14** is, optionally, split into a flash steam stream **20** which is mixed with the hot mixture stream **12** (before separating the vapor from the liquid in the separation vessel **16**) and a bypass steam stream **18** (which bypasses the separation vessel **16**) and, instead is mixed with the vapor phase stream **22** from the separation vessel **16** before the vapor phase is cracked in the radiant section **3** of the furnace **1**. This embodiment can operate with all secondary dilution steam **14** used as flash steam stream **20** with no bypass steam stream **18**. Alternatively, this embodiment can be operated with secondary dilution steam stream **14** directed entirely to bypass steam stream **18** with no flash steam stream **20**.

In a preferred embodiment in accordance with the present invention, the ratio of the flash steam, stream **20** to the bypass steam stream **18** should be preferably 1:20 to 20:1, and most preferably 1:2 to 2:1. The flash steam stream **20** is mixed with the hot mixture stream **12** to form a flash stream **26** before separating the vapor from the liquid in the separation vessel **16**. Preferably, the secondary dilution steam stream **14** is superheated in a superheater tube bank **56** in the convection section **2** of the furnace 1 before splitting and mixing with the hot mixture stream **12**. The addition of the flash steam stream **20** to the hot mixture stream **12** ensures the vaporization of an optimal fraction or nearly all volatile components of the hot mixture stream **12** before the flash stream **26** enters the separation vessel **16**.

The hot mixture stream **12** (or flash stream **26** as previously described) is then introduced into a separation vessel **16** for separation into two phases: a vapor phase comprising predominantly volatile hydrocarbons and a liquid phase comprising predominantly non-volatile hydrocarbons. In one embodiment, the vapor phase stream **22** is preferably removed from the flash drum as an overhead vapor stream **22**. The vapor phase, preferably, is fed back to the lower convection section **48** of the furnace **1** for optional heating and conveyance by crossover pipes **28** to the radiant section **3** of the furnace **1** for cracking. The liquid phase of the separation is removed from the separation vessel 16 as a bottoms stream **30**.

As previously discussed, it is preferred to maintain a predetermined constant ratio of vapor to liquid in the separation vessel **16**. But such ratio is difficult to measure and control. As an alternative, the temperature B of the hot mixture stream **12** before entering the separation vessel **16** can be used as an indirect parameter to measure, control, and maintain the constant vapor-to-liquid ratio in the separation vessel **16**. Ideally, when the hot mixture stream **12** temperature is higher, more volatile hydrocarbons will be vaporized and become available, as a vapor phase, for cracking. However, when the hot mixture stream **12** temperature is too high, more heavy hydrocarbons will be present in the vapor phase and carried over to the convection section **2** furnace tubes, eventually coking the tubes. If the hot mixture stream **12** temperature is too low, hence a low ratio of vapor to liquid in the separation vessel **16**, more volatile hydrocarbons will remain in liquid phase and thus will not be available for cracking.

The hot mixture stream **12** temperature is optimized to maximize recovery/vaporization of volatiles in the heavy hydrocarbon feedstock while excessive coking in the furnace tubes or coking in piping and vessels conveying the mixture from the separation vessel **16** to the furnace **1**. The pressure drop across the piping and vessels conveying the mixture to the lower convection section **48**, and the crossover piping **28**, and the temperature rise across the lower convection section **48** may be monitored to detect the onset of coking. For instance, if the crossover pressure and process inlet pressure to the lower convection section **48** begins to increase rapidly due to coking, the temperature in the separation vessel **16** and the hot mixture stream **12** should be reduced. If coking occurs in the lower convection section **48**, the temperature of the flue gas to the superheater section **56** increases, requiring more desuperheater water **80** to control the temperature in lines **18** and **20**.

Typically, the temperature of the hot mixture stream **12** is set and controlled at between 600 and 1040°F (310 and 560°C), preferably between 700 and 920°F (370 and 490°C), more preferably between 750 and 900°F (400 and 480°C), and most preferably between 810 and 890°F (430 and 475°C). These values will change with the volatility of the feedstock as discussed above.

As previously noted, the furnace draft is continuously measured by pressure differential instruments and periodically adjusted to control the temperature (**B**, **D**, and **C**, respectively) of at least one of the hot mixture stream **12**, the vapor stream **22** and the flash stream **26**. Figure **1** illustrates the control system **98** which comprises a temperature sensor that periodically adjusts the temperature for the mixture stream **12** in connection with the furnace draft measurement. In this embodiment, the control system **98** comprises at least a temperature sensor and any known control device, such as a computer application. The furnace **1** draft is the difference in the pressure of the flue gas in the furnace **1**. For safety reasons, draft measurement is extremely important. If the draft is too low or non-existent, it may result in extremely dangerous operations where the hot radiant flue gas flows from the radiant section **3** to the environment. To ensure that the flue gas only exits the furnace **1** at the top of the stack **64**, it is measured at the location where it is a minimum. Typically, the minimum draft location, measured at points **A₁**, **A₂**, or **A₃**, can be anywhere between the top of the radiant section **3** and the first row of tubes in the lower convection section **48**. The location of minimum draft moves depending on furnace 1 operations. To ensure safe operation of the furnace **1**, the draft set point is higher than required for optimal thermal efficiency of furnace **1**. This ensures that the furnace **1** will run safely during upsets in operation of the furnace **1**.

The inventive process for controlling the temperature of at least one of the hot mixture stream **12**, vapor stream **22**, and flash stream **26** in order to achieve an optimum vapor/liquid separation in separation vessel **16** is determined based on the volatility of the feedstock as described above. In typical operations with heavy hydrocarbon feedstocks, the draft is set at about 0.15 to 0.25" wc (35 to 65 Pa). Water column (wc) is a convenient measure of very small differences in pressure.

Once the furnace **1** is operating, the temperature **B** of the hot mixture stream **12** is measured (alternatively, the temperature **C** of the flash stream **26** or the temperature **D** of the vapor stream **22** is measured) and if that temperature is lower than the desired temperature, then the set point of the draft will be increased. An increase in the set-point draft will, through the means for adjusting the draft, cause an increase in the excess flue gas oxygen in the furnace, which will cause the temperature in the furnace **1** to increase. This will ultimately result in an increase in the temperature **B** of the hot mixture stream **12** (and thus an increase in the temperature **C** of the flash stream **26** and the temperature **D** of the vapor stream **22**).

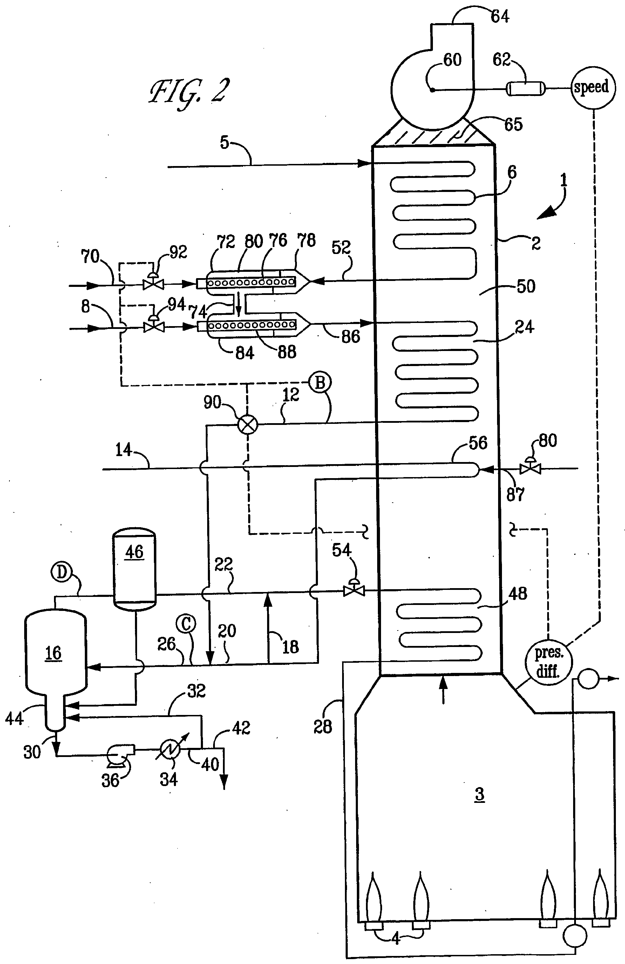

As shown in FIG. 1, the speed of the furnace fan **60** is varied in response to the change in the draft. For example, an increase in the speed of the furnace fan **60** will cause an increase in the draft, which will increase flue gas oxygen and thus will increase the temperature in the convection section **2**. Other means comprise dampers to the burners (not illustrated), furnace stack dampers (see dampers **65**, illustrated in FIG. 2), or any combination of the above. The speed of the furnace fan **60** is the fine tuning means for adjusting the draft and thus the excess oxygen in the furnace **1**. If it becomes necessary to significantly increase the flue gas excess oxygen, then the furnace fan **60** speed can be increased to its maximum speed, which can result in too much draft, but may still not result in enough flue gas oxygen. In this case, the dampers can be opened (this is typically done manually) at the burners **4** or at the fan **60** (see dampers **65** in FIG. 2), thus increasing excess oxygen in the flue gas and possibly reducing the draft in the furnace 1 and the required fan speed.

Use of the draft measurement as part of the control system is a very quick, "real-time" way to periodically adjust and control the temperature **B** of the hot mixture stream **12** (and the temperature **C** of the flash stream **26**) and thus indirectly the ratio of vapor to liquid separated in the separation vessel **16**. A change in the furnace fan **60** speed will almost immediately result in a change in the draft measurement because the pressure of the radiant section **3** responds rapidly to change in furnace fan **60** speed. Draft differential pressure instruments respond very quickly. On the other hand, measuring the excess oxygen is a problem because instruments for measuring excess oxygen respond more slowly to changes in furnace fan **60** speed because it takes a relatively long time for the higher oxygen flue gas to reach oxygen measuring instrument. Therefore, the immediately measurable draft response allows for the control system to quickly react to changes in furnace fan **60** speed which not only mitigates oscillations in the furnace operations, but also allows for a quick way to periodically adjust the temperature **D** in the hot mixture stream **12** (and the temperature **C** in the flash stream **26**) and thus the vapor/liquid separation occurring in the separation vessel **16**.

In addition to maintaining a constant temperature **B** of the hot mixture stream **12** (and the temperature **C** and **D** of the flash stream **26** and the vapor stream **22**, respectively) entering the separation vessel **16**, it is also desirable to maintain a constant hydrocarbon partial pressure of the separation vessel **16** in order to maintain a constant ratio of vapor to liquid separation. By way of examples, the constant hydrocarbon partial pressure can be maintained by maintaining constant separation vessel **16** pressure through the use of control valve 54 on the vapor phase line 22, and by controlling the ratio of steam to hydrocarbon feedstock in flash stream **26**. Typically, the hydrocarbon partial pressure of the flash stream **26** in the present invention is set and controlled at between 4 and 25 psia (25 and 175kPa), preferably between 5 and 15 psia (35 to 100 kPa), most preferably between 6 and 11 psia (40 and 75 kPa).

The separation of the vapor phase from the liquid phase is conducted in at least one separation vessel **16.** Preferably, the vapor/liquid separation is a one-stage process with or without reflux. The separation vessel **16** is normally operated at 40 to 200 psia (275 to 1400 kPa) pressure and its temperature is usually the same or slightly lower than the temperature of the flash stream **26** before entering the separation vessel **16**. Typically, for atmospheric resids, the pressure of the separation vessel **16** is 40 to 200 psia (275 to 1400 kPa), and the temperature is 600 to 950°F (310 to 510°C). Preferably, the pressure of the separation vessel **16** is 85 to 155 psia (600 to 1100 kPa), and the temperature is 700 to 920°F (370 to 490°C). More preferably, the pressure of the separation vessel **16** is 105 to 145 psia (700 to 1000 kPa), and the temperature is 750 to 900°F (400 to 480°C). Most preferably, the pressure of the separation vessel **16** is 105 to 125 psia (700 to 760 kPa), and the temperature is 810 to 890°F (430 to 480°C). Depending on the temperature of the flash stream **26**, usually 40 to 98% of the mixture entering the flash drum **16** is vaporized to the upper portion of the flash drum, preferably 60 to 90% and more preferably 65 to 85%, and most preferably 70 to 85%.

The flash stream **26** is operated, in one aspect, to minimize the temperature of the liquid phase at the bottom of the separation vessel **16** because too much heat may cause coking of the non-volatiles in the liquid phase. Use of the optional secondary dilution steam stream **14** in the flash stream **26** entering the separation vessel **16** lowers the vaporization temperature because it reduces the partial pressure of the hydrocarbons (i.e., larger mole fraction of the vapor is steam), and thus lowers the required liquid phase temperature. Alternatively, rather than using a secondary dilution steam stream **14**, it may be possible to achieve the same result by adding more steam in the primary dilution steam stream **8**.

It may also be helpful to recycle a portion of the externally cooled flash drum bottoms liquid **32** back to the separation vessel **16** to help cool the newly separated liquid phase at the bottom of the separation vessel **16**. Liquid stream **30** is conveyed from the bottom of the separation vessel **16** to the cooler **34** via pump **36**. The cooled stream **40** is split into a recycle stream **32** and export stream **42**. The temperature of the recycled stream **32** is ideally 500 to 600°F (260 to 320°C). The amount of recycled stream **32** should be about 80 to 250% of the amount of the newly separated bottom liquid inside the separation vessel **16**.

The separation vessel **16** is also operated, in another aspect, to minimize the liquid retention/holding time in the separation vessel **16**. Preferably, the liquid phase is discharged from the vessel through a small diameter "boot" or cylinder **44** on the bottom of the separation vessel **16**. Typically, the liquid phase retention time in the separation vessel **16** is less than 75 seconds, preferably less than 60 seconds, more preferably less than 30 seconds, and most preferably less than 15 seconds. The shorter the liquid phase retention/holding time in the separation vessel **16**, the less coking occurs in the bottom of the separation vessel **16**.

In the vapor/liquid separation, the vapor phase usually contains less than 100 ppm, preferably less than 80 ppm, and most preferably less than 50 ppm of non-volatiles. The vapor phase is very rich in volatile hydrocarbons (for example, 55-70%) and steam (for example, 30-45%). The boiling end point of the vapor phase is normally below 1400°F (760°C), preferably below 1250°F (675°C). The vapor phase is continuously removed from the separation vessel **16** through an overhead pipe which conveys the vapor to an optional centrifugal separator **46** which removes trace amounts of entrained or condensed liquid. The vapor then flows into a manifold that distributes the flow to the lower convection section **48** of the furnace **1**. The vapor phase stream **22** removed from the separation vessel **16** can optionally be mixed with a bypass steam **18** before being introduced into the lower convection section **48**. The vapor phase stream **22** continuously removed from the separation vessel **16** is preferably superheated in the lower convection section **48** of the furnace 1 to a temperature of, for example, 800 to 1300°F (430 to 700°C) by the flue gas from the radiant section **3** of the furnace **1.** The vapor is then introduced to the radiant section **3** of the furnace **1** to be cracked.

The bypass steam stream **18** is a split steam stream from the secondary dilution steam **14**. As previously noted, it is preferable to heat the secondary dilution steam **14** in the furnace **1** before splitting and mixing with the vapor phase stream removed from the separation vessel **16**. In some applications, it may be possible to superheat the bypass steam stream **18** again after the splitting from the secondary dilution steam **14** but before mixing with the vapor phase. The superheating after the mixing of the bypass steam **18** with the vapor phase stream **22** ensures that all but the heaviest components of the mixture in this section of the furnace **1** are vaporized before entering the radiant section **3**. Raising the temperature of vapor phase to 800 to 1300°F (430 to 700°C) in the lower convection section **48** also helps the operation in the radiant section **3** since radiant tube metal temperature can be reduced. This results in less coking potential in the radiant section. The superheated vapor is then cracked in the radiant section **3** of the furnace **1**.

In another embodiment of the present invention, as illustrated in FIG. 2, the heated heavy hydrocarbon feedstock stream **52** is also mixed with a fluid **70**. It is possible during start-up of the furnace **1** or during a change in the feedstock that it may be necessary to use the fluid **70** stream and the primary dilution steam stream **8** along with the draft control system described in connection with FIG. 1 to control the temperature **B** for the hot mixture stream **12** (optionally mixing with the flash steam stream **20**) entering the separation vessel 16 to achieve a constant ratio of vapor to liquid in the separation vessel 16, and to avoid substantial temperature and flash vapor-to-liquid ratio variations.

This may be necessary because, for example, at start-up, very volatile feeds require a separation vessel **16** temperature that is substantially lower than during steady-state operations since the steam-to-hydrocarbon ratio of the hot mixture stream **12** is higher than during steady-state operations. At minimum flue gas oxygen, fluid **70** may be necessary to achieve the low separation vessel **16** temperature. Also after start-up, during change in feedstock, the lighter feed dilutes the heavy feed resulting in too high a fraction of the hydrocarbon vaporized in separation vessel **16** without fluid **70.** Addition of fluid **70** reduces the temperature of hot mixture stream **12** and the fraction of hydrocarbon vaporized in separation vessel **16**.

The fluid **70** can be a liquid hydrocarbon, water, steam, or mixture thereof. The preferred fluid is water. The temperature of the fluid **70** can be below, equal to, or above the temperature of the heated feedstock stream **52**. The mixing of the heated heavy hydrocarbon feedstock stream **52** and the fluid stream **70** can occur inside or outside the furnace **1**, but preferably it occurs outside the furnace **1**. The mixing can be accomplished using any mixing device known within the art. However it is preferred to use a first sparger **72** of a double sparger assembly **74** for the mixing. The first sparger **72** preferably comprises an inside perforated conduit **76** surrounded by an outside conduit **78** so as to form an annular flow space **80** between the inside and outside conduit. Preferably, the heated heavy hydrocarbon feedstock stream **52** flows in the annular flow space **80**, and the fluid **70** flows through the inside conduit **76** and is injected into the heated heavy hydrocarbon feedstock through the openings in the inside conduit **76**, preferably small circular holes. The first sparger **72** is provided to avoid or to reduce hammering, caused by sudden vaporization of the fluid **70**, upon introduction of the fluid **70** into the heated heavy hydrocarbon feedstock.

In addition to the fluid **70** mixed with the heated heavy feedstock **52**, the primary dilution steam stream **8** is also mixed with the heated heavy hydrocarbon feedstock **52.** The primary dilution steam stream **8** can be preferably injected into a second sparger **84**. It is preferred that the primary dilution steam stream **8** is injected into the heavy hydrocarbon fluid mixture **52** before the resulting stream mixture **86** enters the convection section **2** for additional heating by radiant section **3** flue gas. More preferably, the primary dilution steam stream **8** is injected directly into the second sparger **84** so that the primary dilution steam stream **8** passes through the sparger **84** and is injected through small circular flow distribution holes **88** into the hydrocarbon feedstock fluid mixture.

The mixture of fluid **70**, feedstock and primary dilution steam stream (along with the flash stream **20**) is then introduced into a separation vessel **16** for, as previously described, separation into two phases: a vapor phase comprising predominantly volatile hydrocarbons and a liquid phase comprising predominantly non-volatile hydrocarbons. The vapor phase is preferably removed from the separation vessel **16** as an overhead vapor stream **22**. The vapor phase, preferably, is fed back to the lower convection section **48** of the furnace **1** for optional heating and is conveyed through crossover pipe(s) **28** to the radiant section 3 of the furnace **1** for cracking. The liquid phase of the separation is removed from the separation vessel 16 as a bottoms stream **30**.

As previously discussed, the selection of the hot mixture stream **12** temperature **B** is also determined by the composition of the feedstock materials. When the feedstock contains higher amounts of lighter hydrocarbons, the temperature of the hot mixture stream **12** can be set lower. As a result, the amount of fluid used in the first sparger **72** is increased and/or the amount of primary dilution steam used in the second sparger **84** is decreased since these amounts directly impact the temperature of the hot mixture stream **12**. When the feedstock contains a higher amount of non-volatile hydrocarbons, the temperature of the mixture stream **12** should be set higher. As a result, the amount of fluid used in the first sparger **72** is decreased while the amount of primary dilution steam stream **8** used in the second sparger **84** is increased.

In this embodiment, when a temperature for the mixture stream **12** before the separation vessel **16** is set, the control system **90** automatically controls the fluid valve **92** and the primary dilution steam valve **94** on the two spargers. When the control system **90** detects a drop of temperature of the hot mixture stream **12**, it will cause the fluid valve **92** to reduce the injection of the fluid into the first sparger **72**. If the temperature of the hot mixture stream **12** starts to rise, the fluid valve **92** will be opened wider to increase the injection of the fluid **70** into the first sparger **72**. As described further below, FIG. 2 also illustrates combined control of furnace draft with sparger fluid (preferably water) **70** and primary dilution steam stream **8** using the control system **90** which in addition to communicating with the spargers can also communicate with the draft (pressure differential) measurement device.

In this embodiment; the control system **90** comprises at least a temperature sensor and any known control device, such as a computer application. Preferably, the temperature sensors are thermocouples. The control system **90** communicates with the fluid valve **92** and the primary dilution steam valve **94** so that the amount of the fluid **70** and the primary dilution steam stream **8** entering the two spargers is controlled. In a preferred embodiment in accordance with the present invention, the control system **90** can be used to control both the amount of the fluid and the amount of the primary dilution steam stream to be injected into both spargers. In the preferred case where the fluid is water, the controller varies the amount of water and primary dilution steam to maintain a constant mixture stream temperature **12**, while maintaining a constant ratio of water-to-feedstock in the mixture **11**.

When the primary dilution steam stream **8** is injected to the second sparger **84**, the temperature control system **90** can also be used to control the primary dilution steam valve **94** to adjust the amount of primary dilution steam stream injected to the second sparger **84.** This further reduces the sharp variation of temperature changes in the separation vessel **16**. When the control system **90** detects a drop of temperature of the hot mixture stream **12**, it will instruct the primary dilution steam valve **94** to increase the injection of the primary dilution steam stream into the second sparger **84** while valve **92** is closed more. If the temperature starts to rise, the primary dilution steam valve **94** will automatically close more to reduce the primary dilution steam stream **8** injected into the second sparger **84** while valve **92** is opened wider.

To further avoid sharp variation of the flash temperature, the present invention also preferably utilizes an intermediate desuperheater **80** in the superheating section **56** of the secondary dilution steam stream **14** in the furnace 1. This allows the superheater outlet temperature to be controlled at a constant value, independent of furnace load changes, coking extent changes, and excess oxygen level changes. Normally, this desuperheater **80** ensures that the temperature of the secondary dilution steam stream **14** is between 800 and 1100°F (430 to 590°), preferably between 850 and 1000°F (450 to 540°), more preferably between 850 and 950°F (450 to 510°C), and most preferably between 875 and 925°F (470 to 500°C).

The desuperheater **80** preferably is a control valve and water atomizer nozzle. After partial preheating, the secondary dilution steam stream **14** exits the convection section, and a fine mist of water **87** is added which rapidly vaporizes and reduces the temperature. The steam is then further heated in the convection section. The amount of water added to the superheater controls the temperature of the flash steam stream **20** which is mixed with hot mixture stream **12**.

Although it is preferred to adjust the amounts of the fluid and the primary dilution steam streams injected into the heavy hydrocarbon feedstock in the two spargers **72** and **84**, according to the predetermined temperature of the mixture stream **12** before the flash drum **16**, the same control mechanisms can be applied to other parameters at other locations. For instance, the flash pressure and the temperature and the flow rate of the flash steam **26** can be changed to effect a change in the vapor-to-liquid ratio in the flash.

Combined control of furnace draft, damper position, sparger fluid (preferably water), secondary dilution bypass flow rate, secondary dilution steam desuperheater water and, to a lesser extent, separator pressure can effect the optimal separator temperature and gas/liquid split for light, but hot feeds such as preheated light crude. In one embodiment, the steps to reach the target separator gas/liquid ratio may be as follows: First, the draft and position of the fan damper(s) **65** and/or flue gas damper(s) can be controlled to minimum flue gas oxygen of about 2%. Second, sparger fluid **70**, water, can be maximized with no primary steam stream **8** flow. Third, water to the secondary dilution steam **14** desuperheater **80** can be maximized to maximize heat absorbed. Fourth, all of the superheated secondary dilution steam stream **14** can bypass the separation vessel **16**. Fifth, the separation vessel **16** pressure can be raised.

The furnace **1** can also crack hydrocarbon feedstocks which do not contain non-volatiles, such as HAGO, clean condensates, or naphtha. Because no non-volatiles deposit as coke in tube bank **24**, these feeds are completely vaporized upstream of line **12**. Thus, the separation vessel **16** has no vapor/liquid separation function and is simply a wide spot in the line. Typically, the separation vessel **16** operates at 425 to 480°C (800 to 900°F) during HAGO, condensate, and naphtha operations.

## Claims

1. Process for cracking a heavy hydrocarbon feedstock in a furnace having a convection section and a radiant section with radiant section burners which provide hot flue gas in said furnace which process comprises heating a heavy hydrocarbon feedstock in the convection section, mixing the heated heavy hydrocarbon feedstock with a primary dilution steam stream, heating the mixed feedstock and primary dilution stream in the convection section to form a hot mixture stream having vapor phase and a liquid phase; separating said vapor phase and said liquid phase in a separation vessel; and cracking said vapor phase in the radiant section to produce an effluent containing olefins, **characterized in that** said furnace has a draft and means for adjusting said draft and that the draft in said furnace is continuously measured and periodically adjusted to control the temperature of the hot mixture stream and/or the vapor phase to maintain the ratio of said vapor phase and said liquid phase in the vessel substantially constant.

2. Process of claim 1, wherein the draft is adjusted by varying the speed of at least one furnace fan to control the flow of said hot flue gas and/or the draft is adjusted by changing the position of at least one furnace damper to control flow of said hot flue gas.

3. Process of any preceding claim, wherein the draft is adjusted in response to a comparison of the temperature of the mixed stream and a predetermined mixed stream temperature and/or the draft is adjusted in response to a comparison of the vapor phase temperature after its separation from the liquid phase and a pre-determined vapor phase temperature.

4. Process of any preceding claim, wherein the temperature of said hot mixture stream is further controlled by varying at least one of the flow rate or the temperature of said primary dilution steam stream.

5. Process of any preceding claim, further comprising mixing said heated heavy hydrocarbon feedstock with a fluid comprising a liquid hydrocarbon and/or water prior to separating said vapor phase from said liquid phase.

6. Process of claim 5, wherein the temperature of said hot mixture stream is further controlled by varying the flow rate of said fluid mixed with said heated hydrocarbon feedstock.

7. Process of any preceding claim, wherein a secondary dilution steam stream is superheated in said furnace and at least a portion of said secondary dilution steam stream is then mixed with said hot mixture stream before separating said vapor phase from said liquid phase.

8. Process of claim 7, wherein the temperature of said hot mixture stream is further controlled by varying the flow rate and temperature of said secondary dilution steam stream.

9. Process any preceding claim, wherein said heavy hydrocarbon feedstock comprises at least one of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, crude oil, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, hydrocarbon gases/residue admixtures, hydrogen/residue admixtures, C4's/residue admixtures, naphtha/residue admixture, and gas oil/residue admixtures.

10. Process of any preceding claim, wherein said heavy hydrocarbon_feedstock has a nominal final boiling point of at least 600°F (315°C).

11. Process of any preceding claim, wherein the temperature of said hot mixture stream before separating said vapor phase from said liquid phase is from 600°F to 1040°F (315°C to 560°C).

12. Process of any preceding claim, further comprising maintaining at least 40% to 98% of said hot mixture stream in said vapor phase after being separated from said liquid phase in said at least one separation vessel.

13. Process of any preceding claim, further comprising the additional step of quenching said effluent, after said effluent, leaves said radiant section of said furnace, using a transfer line exchanger.

## Patentansprüche

1. Verfahren zum Cracken eines schweren Kohlenwasserstoff-Einsatzmaterials in einem Ofen, der eine Konvektionszone und eine Strahlungswärmezone mit Strahlungswärmezonenbrennern aufweist, die heißes Rauchgas in dem Ofen bereitstellen, wobei bei dem Verfahren ein schweres Kohlenwasserstoff-Einsatzmaterial in der Konvektionszone erwärmt wird, das erwärmte schwere Kohlenwasserstoff-Einsatzmaterial mit einem ersten Verdünnungswasserdampfstrom gemischt wird, das gemischte Einsatzmaterial und der erste Verdünnungsstrom in der Konvektionszone erwärmt werden, um einen heißen Mischungsstrom zu bilden, der eine Dampfphase und eine Flüssigkeitsphase aufweist, die Dampfphase und die Flüssigkeitsphase in einem Trenngefäß getrennt werden und die Dampfphase in der Strahlungswärmezone gecrackt wird, um einen Ausfluss zu erzeugen, der Olefine enthält, **dadurch gekennzeichnet, dass** der Ofen einen Luftzug und Mittel zum Anpassen des Luftzuges aufweist und dass der Luftzug im Ofen kontinuierlich gemessen und regelmäßig angepasst wird, um die Temperatur des heißen Mischungsstroms und/oder der Dampfphase zu steuern, um das Verhältnis von der Dampfphase und der Flüssigkeitsphase in dem Gefäß im Wesentlichen konstant zu halten.

2. Verfahren nach Anspruch 1, bei dem der Luftzug angepasst wird, indem die Geschwindigkeit von mindestens einem Ofenventilator verändert wird, um den Fluss des heißen Rauchgases zu steuern, und/oder der Luftzug angepasst wird, indem die Position von mindestens einem Ofenschieber gewechselt wird, um den Fluss des heißen Rauchgases zu steuern.

3. Verfahren nach einem der vorhergehenden Ansprüche, bei dem der Luftzug als Antwort auf einen Vergleich der Temperatur des gemischten Stroms und einer vorgegebenen gemischten Stromtemperatur angepasst wird und/oder der Luftzug als Antwort auf einen Vergleich der Temperatur der Dampfphase nach ihrer Trennung von der Flüssigkeitsphase und einer vorgegebenen Temperatur der Dampfphase angepasst wird.

4. Verfahren nach einem der vorhergehenden Ansprüche, bei dem die Temperatur des heißen Mischungsstroms ferner gesteuert wird, indem mindestens eine von der Durchflussgeschwindigkeit oder der Temperatur des ersten Verdünnungsdampfstroms verändert wird.

5. Verfahren nach einem der vorhergehenden Ansprüche, bei dem ferner das erwärmte schwere Kohlenwasserstoff-Einsatzmaterial mit einem Fluid vermischt wird, das einen flüssigen Kohlenwasserstoff und/oder Wasser enthält, bevor die Dampfphase von der Flüssigkeitsphase getrennt wird.

6. Verfahren nach Anspruch 5, bei dem die Temperatur des heißen Mischungsstroms ferner gesteuert wird, indem die Durchflussgeschwindigkeit des mit dem erwärmten Kohlenwasserstoff-Einsatzmaterials vermischten Fluids verändert wird.

7. Verfahren nach einem der vorhergehenden Ansprüche, bei dem ein zweiter Verdünnungswasserdampfstrom im Ofen überhitzt wird und mindestens ein Teil des zweiten Verdünnungswasserdampfstromes dann mit dem heißen Mischungsstrom gemischt wird, bevor die Dampfphase von der Flüssigkeitsphase getrennt wird.

8. Verfahren nach Anspruch 7, bei dem die Temperatur des heißen Mischungsstroms ferner gesteuert wird, indem die Durchflussgeschwindigkeit und Temperatur des zweiten Verdünnungswasserdampfstroms verändert werden.

9. Verfahren nach einem der vorhergehenden Ansprüche, bei dem das schwere Kohlenwasserstoff-Einsatzmaterial mindestens eines aus dampfgecracktem Gasöl und Rückständen, Gasölen, Heizölen, Düsentreibstoff, Diesel, Kerosin, Benzin, Verkoker-Naphtha, dampfgecracktem Naphtha, katalytisch gecracktem Naphtha, Hydrocrackprodukt, Reformat, Raffinationsreformat, Fischer-Tropsch-Flüssigkeiten, Fischer-Tropsch-Gasen, natürlichem Benzin, Destillat, frischem Naphtha, Rohöl, Normaldruckverdampferrückständen, Vakuumverdampferströmen einschließlich Rückständen, Kondensaten mit breitem Siedebereich von Naphtha bis Gasöl, schweren gebrauchten Kohlenwasserstoffströmen von Raffinerien, Vakuumgasölen, schwerem Gasöl, mit Rohöl verunreinigtem Naphtha, **Normaldruckrückstand**, schwerem Rückstand, Kohlenwasserstoffgase/Rückstand-Beimischungen, Wasserstoff/Rückstand-Beimischungen, C4-Fraktion/Rückstand-Beimischungen, Naphtha/Rückstand**-Beimischungen und** Gasöl/Rückstand-Beimischungen enthält.

10. Verfahren nach einem der vorhergehenden Ansprüche, bei dem das schwere Kohlenwasserstoff-Einsatzmaterial einen nominalen Endsiedepunkt von mindestens 315 °C (600 °F) aufweist.

11. Verfahren nach einem der vorhergehenden Ansprüche, bei dem die Temperatur des heißen Mischungsstroms vor Trennung der Dampfphase von der Flüssigkeitsphase 315 °C bis 560 °C (600 °F bis 1040 F) beträgt.

12. Verfahren nach einem der vorhergehenden Ansprüche, bei dem ferner mindestens 40% bis 98% des heißen Mischungsstroms in der Dampfphase verbleibt, nachdem sie in mindestens einem Trenngefäß von der Flüssigkeitsphase getrennt worden ist.

13. Verfahren nach einem der vorhergehenden Ansprüche, das ferner einen zusätzlichen Schritt des Abschreckens des Ausflusses unter Verwendung eines Wärmetauschers umfasst, nachdem der Ausfluss die Strahlungswärmezone des Ofens verlässt.

## Revendications

1. Procédé de craquage d'une charge d'hydrocarbures lourds dans un four ayant une section de convection et une section radiante avec des brûleurs de section radiante qui délivrent du gaz de combustion chaud dans ledit four, lequel procédé comprend le chauffage d'une charge d'hydrocarbures lourds dans la section de convection, le mélange de la charge d'hydrocarbures lourds chauffée avec un courant de vapeur d'eau de dilution primaire, le chauffage de la charge et du courant de dilution primaire mélangés dans la section de convection pour former un courant de mélange chaud ayant une phase vapeur et une phase liquide ; la séparation de ladite phase vapeur et de ladite phase liquide dans une cuve de séparation ; et le craquage de ladite phase vapeur dans la section radiante pour produire un effluent contenant des oléfines, **caractérisé en ce que** ledit four a un tirage et un moyen pour ajuster ledit tirage et **en ce que** le tirage dans ledit four est mesuré en continu et ajusté périodiquement pour réguler la température du courant de mélange chaud et/ou de la phase vapeur afin de maintenir le rapport entre ladite phase vapeur et ladite phase liquide dans la cuve sensiblement constant.

2. Procédé de la revendication 1, dans lequel le tirage est ajusté en faisant varier la vitesse d'au moins un ventilateur de four pour réguler l'écoulement dudit gaz de combustion chaud et/ou le tirage est ajusté en changeant la position d'au moins un registre de four pour réguler l'écoulement dudit gaz de combustion chaud.

3. Procédé d'une quelconque revendication précédente, dans lequel le tirage est ajusté en réponse à une comparaison de la température du courant mélangé et d'une température de courant mélangé prédéterminée et/ou le tirage est ajusté en réponse à une comparaison de la température de la phase vapeur après sa séparation de la phase liquide et d'une température de phase vapeur prédéterminée.

4. Procédé d'une quelconque revendication précédente, dans lequel la température dudit courant de mélange chaud est en outre régulée en faisant varier le débit et/ou la température dudit courant de vapeur d'eau de dilution primaire.

5. Procédé d'une quelconque revendication précédente, comprenant en outre le mélange de ladite charge d'hydrocarbures lourds chauffée avec un fluide comprenant un hydrocarbure liquide et/ou de l'eau avant la séparation de ladite phase vapeur de ladite phase liquide.

6. Procédé de la revendication 5, dans lequel la température dudit courant de mélange chaud est en outre régulée en faisant varier le débit dudit fluide mélangé avec ladite charge d'hydrocarbures chauffée.

7. Procédé d'une quelconque revendication précédente, dans lequel un courant de vapeur d'eau de dilution secondaire est surchauffé dans ledit four et au moins une partie dudit courant de vapeur d'eau de dilution secondaire est ensuite mélangée avec ledit courant de mélange chaud avant de séparer ladite phase vapeur de ladite phase liquide.

8. Procédé de la revendication 7, dans lequel la température dudit courant de mélange chaud est en outre régulée en faisant varier le débit et la température dudit courant de vapeur d'eau de dilution secondaire.

9. Procédé d'une quelconque revendication précédente, dans lequel ladite charge d'hydrocarbures lourds comprend au moins un élément parmi du gazole et des résidus de vapocraquage, des gazoles, du mazout, du carburéacteur, du diesel, du kérosène, de l'essence, du naphta d'unité de cokéfaction, du naphta de vapocraquage, du naphta craqué catalytiquement, de l'hydrocraquat, du reformat, du reformat de raffinat, des liquides de Fischer-Tropsch, des gaz de Fischer-Tropsch, de l'essence naturelle, un distillat, du naphta vierge, du pétrole brut, des queues de four tubulaire de distillation atmosphérique, des courants de four tubulaire de distillation sous vide comportant des queues, des condensats à large intervalle d'ébullition allant du naphta au gazole, des courants d'hydrocarbures lourds non vierges provenant de raffineries, des gazoles sous vide, du gazole lourd, du naphta contaminé par du brut, un résidu atmosphérique, un résidu lourd, des mélanges hydrocarbures gazeux/résidu, des mélanges hydrogène/résidu, des mélanges hydrocarbures en C4/résidu, un mélange naphta/résidu, et des mélanges gazole/résidu.

10. Procédé d'une quelconque revendication précédente, dans lequel ladite charge d'hydrocarbures lourds a un point d'ébullition final nominal d'au moins 600 °F (315 °C).

11. Procédé d'une quelconque revendication précédente, dans lequel la température dudit courant de mélange chaud avant la séparation de ladite phase vapeur de ladite phase liquide est de 600 °F à 1040 °F (315 °C à 560 °C).

12. Procédé d'une quelconque revendication précédente, comprenant en outre le maintien d'au moins 40 % à 98 % dudit courant de mélange chaud dans ladite phase vapeur après qu'elle a été séparée de ladite phase liquide dans ladite au moins une cuve de séparation.

13. Procédé d'une quelconque revendication précédente, comprenant en outre l'étape supplémentaire de trempe dudit effluent, après que ledit effluent a quitté ladite section radiante dudit four, au moyen d'un échangeur de ligne de transfert.
